# EUROPEAN PATENT APPLICATION

(11) **EP 2 189 693 A1**
(43) Date of publication of application: **26.05.2010**
(21) Application number: 09158936.6
(22) Date of filing: 28.04.2009
(51) Int. Cl.: F16K 11/04

(54) **Valve Unit**

(30) Priority: 18.11.2008 EP 08020083
(71) Applicant: Sauer-Danfoss GmbH & Co. OHG, 24539 Neumünster (DE)
(72) Inventor: Reimer, Markus, 25336, Klein Nordende (DE)
(74) Representative: Nestler, Jan Hendrik

(57) **Abstract**

The invention relates to a valve unit (1, 27, 37, 38) for a valve receiving space (18) of a fluid working machine (19), comprising at least one valve device (2, 3, 28, 37, 38) and at least one attachment means (22) for attachment of said valve unit (1, 27, 37, 38) to said valve receiving space (18). The valve unit (1, 27, 37, 38) is designed and arranged in a way that when at least one of said valve devices (2, 3, 28, 37, 38) is pushed towards its closed position under the influence of fluid pressure, at least part of the fluid pressure is generating a force (H, L), which is at least partially directed towards said receiving space (18) of said valve unit (1, 27, 37, 38).

## Description

The invention relates to a valve unit for a valve receiving space, in particular for a valve receiving space of a fluid working machine, comprising at least one valve device and at least one attachment means for attachment of said valve unit to said valve receiving space. The invention also relates to a fluid working machine.

When the flow of fluids has to be controlled or influenced in some way, usually valves are used for this purpose. As an example, if a fluid flow is allowed in one direction, but has to be suppressed in the opposite direction, check valves can be used for this purpose. Of course, depending on the actual regulating necessities, a plethora of different designs of valves is known.

Generally speaking, valves fall into two categories, namely into passive valves and active valves. Passive valves are generally operated by the fluid itself, particularly under the influence of pressure differences occurring within the fluid flow. Active valves, on the other side, are operated in response to an external signal. The external signal can be a mechanical signal, for example a control lever or a plunger of the valve. For operating active valves in an automated way, usually different ways for actuating are used, for example an electric or pneumatic actuation of the valves.

Actuated valves are widely used, e.g. in engines of motor vehicles, where the actuation signal is normally applied by a mechanical transmission using a camshaft. However, the use of actuated valves is not restricted to engines. Actuated valves are also used, for example, in fluid working machines, such as in hydraulic motors and in particular in hydraulic pumps.

A relatively new approach for building hydraulic machines (e.g. hydraulic pumps and hydraulic motors) are the so called synthetically commutated hydraulic machines, also known as digital displacement pumps. They are a unique subset of variable displacement hydraulic machines. One of the major advantages of synthetically commutated hydraulic machines is their energy efficiency, as well as their ability to quickly adapt to rapidly changing hydraulic fluid flow demands.

The difference between a synthetically commutated hydraulic pump and a standard hydraulic pump basically lies in the replacement of the normally passive fluid inlet valves, fluidly connecting the hydraulic fluid inlet manifold to the pump's cyclically changing pumping cavity, by actively controlled actuated valves. For performing a pumping function, it is sufficient to replace the passive low pressure fluid inlet valves by actuated valves, while the high pressure valves may continue to be passive valves. A synthetically commutated hydraulic pump can be operated in a full stroke pumping mode, a part stroke pumping mode and an idle mode.

Furthermore, if the passive high pressure valves are replaced by actuated valves as well, a motoring mode can be implemented by a corresponding actuation of the high pressure valves and low pressure valves. Similar to the pumping mode, this motoring mode cannot only be performed in a full stroke motoring mode, but also in a part stroke motoring mode, if the fluid inlet valves and the fluid outlet valves are actuated during the contraction phase and/or expansion phase of the hydraulic pump's cavity accordingly.

A possible design for such a synthetically commutated hydraulic machine, as well as a possible way of operating said synthetically commutated hydraulic machine, is described in EP 0 494 236 B1 or WO 91/05163 A1, for example.

Independent of the exact design of the fluid working machine, usually receiving spaces within the hydraulic machine's body are provided for receiving the respective valve. Usually the receiving spaces are provided as some kind of bore, which is brought into the machine's body from the outside. Then, the respective valve is mounted from the outside by fixedly attaching it into the receiving space. This design is very straightforward and very simple. However, if the fluid working machine is configured to work with pressures above ambient pressure level, the fluid pressure tend to push the valve out of its receiving space. This, however, is usually not seen as being problematic, because the mechanical forces occurring can be easily handled. Usually, the bore is provided with an inner thread (female thread), while the valve is provided with an outer thread (male thread), so that the valve is simply screwed into its receiving space. By this design, the mechanical forces occurring can be easily handled. So far the problem was essentially only seen in providing a leakage proof seal, so that the pressurised fluid cannot leak to the outside. For this, different types of seals are known in the state of the art. In effect, those seals usually require a higher squeezing force anyhow, so that they provide a sufficiently tight fluid seal. For generating such a high mechanical squeezing force, the usual attachment of valves by the use of threads proves to be advantageous, because it can easily provide for such a high mechanical squeezing force.

However, this previously described type of design has disadvantages as well, although these disadvantages are usually not noticed.

The first problem is that due to the high mechanical forces, which have to be provided by the attachment means of the valve unit, certain dimensions and certain types of designs for attachment means become problematic or even impossible. Furthermore, the body of the hydraulic working machine itself has to have a certain strength and a certain thickness (particularly a sufficient length) for providing a sufficiently strong base for holding the valve unit in the receiving space.

A second problem, which is partially interlinked to the previously described problem, is that with presently used attachment means, it is problematic to provide for an angular positioning of the valve unit, when mounted inside the valve receiving space. With passive mechanical check valves, this might not be considered to be particularly problematic. This is, because check valves usually show an essentially rotationally symmetric design anyhow. However, when actuated valves are used, the attachment of actuating means can bring up certain problems, when the angular position of the valves in their mounted state is not clear. This is particularly problematic when an automated assembly is to be performed. According to the state of the art, these problems are generally addressed by providing special designs of connecting means for connecting the actuator to the valve and/or for providing the actuator with an appropriate control signal (for example an electric control signal). The design of the connecting means is usually chosen in a way that at least a certain angular misalignment can be compensated.

However, the assembly of the valve unit into a fluid working machine remains problematic.

It is therefore the object of the invention to provide for an improved valve unit, which can be mounted into a valve receiving space, in particular into a valve receiving space of a fluid working machine. Furthermore it is an object of the invention to provide for an improved fluid working machine, comprising at least one valve unit.

To solve the problem it is suggested to design a valve unit for a valve receiving space, in particular a valve unit for a valve receiving space of a fluid working machine, which comprises at least one valve device and at least one attachment means for attachment of said valve unit to said valve receiving space in a way that said valve unit is designed and arranged in a way that when at least one of said valve devices is pushed towards its closed position under the influence of fluid pressure, at least part of the fluid pressure is generating a force, which is at least partially directed towards said receiving space of said valve unit. By this design, the resulting forces, which are tending to push the valve unit out of its receiving space, when pressurised fluid is present in and/or around said valve unit, can be at least partially compensated. Thus, it is not only possible to reduce the forces, trying to push the valve unit out of its receiving space down to a certain percentage (say down to 90%, 80%, 70%, 60%, 50%, 30%, 20% and/or 10% of the "original" force). Instead, it is even possible to essentially completely compensate for the force, pushing the valve unit out of the valve receiving space in a pressurised state (e.g. only 5%, 4%, 3%, 2% or 1% of the "original" force remains). It is even possible to design a valve unit in a way that in a pressurised state, the valve unit is even pushed into its receiving space under the influence of fluid pressure. This "overcompensation" of the force, pushing the valve unit outwards, can be advantageously used for increasing the fluid tightness of the mounted valve unit. This is particularly advantageous, because a high force is needed for sealing the highly pressurised fluid; this highly pressurised fluid, however, can now at least in part provide for this high mounting force. For designing such a valve unit, essentially all designs, which are used for so-called "balanced valves" according to the state of the art can be used. However, this pressure balancing is not (only) used for lowering the necessary actuation forces for the actuated valves / valve actuators, as it is used according to the of the art. Instead, these principles (and even additional principles) can be used for holding the valve unit in its receiving space.

Preferably the valve unit is designed in a way that at least one of said valve devices comprises at least one valve seat and at least one valve head. This type of design has advantages, because fluid pressure differences can be used to (partly) actuate the valve. For example, if a pressure difference exists in the opening direction of the valve device, the fluid pressure difference can be used for opening the valve device (valve head located apart from the valve seat). Seen vice versa, if the valve device is closed (valve seat and valve head are in contact with each other) and a pressure difference exists in the closing direction of the valve unit, the fluid pressure can (additionally) push the valve head onto its respective valve seat, so that a particularly leak proof closing state of the valve device can be promoted. Furthermore, valve devices of the valve seat-and-valve head design have the advantage that a relatively small movement of the valve device can result in a relatively large change in the valve's orifice.

Another preferred embodiment can be achieved if said valve unit comprises a plurality of valve devices, whose opening and/or closing movements are preferably at least in part independent of each other. This way, the valve unit, which can be handled and sold as a preassembled subunit, can perform several functions for the respective fluid working machine. This way, the storage problems for the parts which are needed for the assembly of the fluid working machine can be reduced. Furthermore, the amount of valve receiving spaces that have to be provided for a given fluid working machine can be reduced. This can simplify the machining of the fluid working machine's body. Furthermore, the assembly of the resulting fluid working machine can be simplified. Additionally, leakage problems can be reduced by such a design as well. However, even a plurality of valve devices, whose opening and/or closing movements are dependent on each other, can prove to be advantageous. This way, the total fluid cross section can be easily enlarged, without modifying the valve devices themselves. Instead, the number of the respective valve devices can simply be enhanced.

Preferably, at least one of said valve devices of the suggested valve unit, in particular a single valve device, is an actuated valve device. By designing the valve unit in such a way, the respective valve device (and hence the respective valve unit) can be used for even more purposes. In particular, such actuated valves devices and/or valve units are essential for providing certain functionalities. As an example, for building a synthetically commutated hydraulic machine, at least some (or even all) of the valves have to be of the actuated valve type. Because of the previously described design, it is easier to design the valve unit in a way, so that it has a defined position (in particular angular position) in its mounted position. This way, the connection of an actuator and/or of an actuation signal for an actuator can be provided easier and/or more reliable. This is particularly true, when an automated connection has to be performed. Furthermore, a valve unit with different fluid inlet ports and/or fluid outlet ports (in particular when at least part of the fluid inlet ports and/or fluid outlet ports are spaced from each other at different angular positions) can be implemented more easily.

Another possible embodiment can be achieved, if at least one of said valve devices of the valve unit, preferably a plurality of said valve devices, is a passive valve device. This way, a valve unit with different fluid inlet ports and/or fluid outlet ports, who can lead at least in part to different valve devices, can be provided more easily, in particular when said fluid inlet ports and/or said fluid outlet ports are at least in part defined by different angular positions.

Another preferred embodiment of said valve unit can be achieved, if at least two of said valve devices have a common fluid connection. This way, a fluid connection between said common fluid connection and two different (or even more different) fluid ports can be established depending on the position of the respective valve devices. In particular, it is possible to alternatively establish a fluid connection between said common fluid connection and a first fluid outlet port as well as between said common fluid connection and a second fluid port. Said first fluid port, said second fluid port and/or said common fluid port, leading to said common fluid connection (and even more fluid ports, if applicable) can be a fluid inlet port, a fluid outlet port or a combination of both (changing its state with time, for example). Thus, a changeover valve (or an "approximation" to a changeover valve) can be provided. In particular, such a valve unit can prove to be particularly suitable for synthetically commutated hydraulic machines, particularly to synthetically commutated hydraulic pumps. As an example, the common fluid connection can be realised by some kind of a fluid line.

Preferably, the valve unit can be designed in a way that said common fluid connection is located in the middle of said valve devices. In particular, it is possible to design this embodiment in the form of some kind of a common fluid chamber, to which different valve devices connect. In particular, a common fluid chamber can be provided that is perforated by a plurality of openings, wherein the openings form valve seats for different valve units.

A preferred embodiment of the valve unit can be achieved, if at least one of said valve devices is movably arranged on at least another of said valve devices. This way, it is easily possible to design certain features into a single valve unit, for example a plurality of valve devices, an (essentially) independent movement of the valve devices and/or the possibility to provide several valve devices with a common fluid connection. Preferably, by the movable arrangement of said valve devices relative to each other, said valve devices can open and/or close independently from each other. However, it is also possible to provide the arrangement with a certain coupling of the valve devices. For example, it is possible that the two (or more) valve devices can be coupled elastically (i.e., there is a force acting between them, but no enforced movement between the valve units exists). Furthermore it is also possible that certain movements of the valve units relative to each other are prohibited, while other movements relative to each other are allowed. Such a connection could be realised by providing some limiting stops, for example.

Furthermore, it is possible to design said valve unit in a way that at least one of said valve devices, preferably at least one actuated valve device, is actuated in a mounting direction of said valve unit. In other words, the moving direction of said valve unit is in an axial direction of the valve unit. This way, a first and/or a second fluid port of said valve device can be arranged coaxially. This way it is possible to provide very large fluid flow cross-sections easily. The valve device can be designed as a valve head-valve seat device. The actuation force can be transmitted by some kind of a movable stem, which is connected to a part of the valve unit, preferably to a valve head of the valve unit. The other end of the stem can be connected to an actuator. This way, it is easily possible to provide for a mechanical separation between valve actuator and valve device. Furthermore, the actuator can be positioned easily at a position, where it can be easily accessed from the outside.

Yet another preferred embodiment of the valve unit can be achieved, if at least one of said valve devices, preferably at least one passive valve device is arranged in a direction that is perpendicular to said mounting direction of said valve unit. Such an arrangement can easily provide space for a stem, which is connecting an actuator with an actuated valve device (see previous description). In particular, it has to be noted that said at least one passive valve device normally does not need any connection to an actuator or another device. By the proposed arrangement, a radial flow into and/or out of the valve unit can be provided, which can prove to be advantageous. By providing a plurality of such valve devices, the overall fluid flow cross-section for the fluid flow can be enlarged.

Furthermore it is proposed to provide said valve unit with at least one angular positioning device. This way, a definite angular position of the valve unit can be guaranteed, if said valve unit is positioned in said valve receiving space. The angular positioning device can be provided in any way, which is known according to the state of the art. For example, it could be provided by an appropriate shaping of the valve unit and the valve receiving space (for example, a rectangular, a triangular, a pentagonal, a polygon with n edges, an oval and/or an ellipsoidal form can be used for this purpose; the edges (or at least some of them) of a polygon may or may not have the same length). Also, some kind of web, which is received by a groove, can be used. The lengths of the web/groove or the polygonal, oval and/or ellipsoidal form can extend essentially over the whole length of the valve unit, or only over a short length (preferably in a region close to the outside of the valve receiving space of a fluid working machine).

Preferably, at least one of said attachment means is at least partially designed as a flange means. This way, a fluid proof seal can be provided relatively easily, when high fluid pressures have to be handled with. Using a flange means, a sealing area between an inside of a flange and an outside of the body, in which the valve receiving space is provided, can have a substantial size (e.g. liquid, which tends to flow past the flange has to flow for a relatively long distance through a sealing gap). The seal can be further improved by providing a sealing, of course. Furthermore, in the flange parts some small bores can be provided. Additional bores can be provided at an appropriate position in the body, in which the valve receiving space is provided. In particular, the bores in the body can be provided with a thread. This way, the valve unit can be attached in the valve receiving space by one or several screws of a relatively small size.

Furthermore, a fluid working machine is suggested, which has at least one valve unit, wherein the valve unit is designed in the previously described way. Such a fluid working machine can show the same features and advantages in analogy, which have been described within the context of the valve unit.

In particular, it is possible to design said fluid working machine as a synthetically commutated hydraulic machine. Because synthetically commutated hydraulic machines necessitate the use of actuated valves, the suggested valve unit can have particular advantages for the design and operation of the fluid working machine.

When the expression "fluid" is used, all different types of fluids are encompassed by this expression. In particular, liquids, gases and mixtures between liquids and gases are encompassed. Furthermore, supercritical fluids, where no distinction between gas and liquid can be made anymore, can be considered to be fluids as well. Finally, the gas, the liquid and/or the supercritical fluid can contain a certain amount of solid particles as well (suspension, smoke).

Further advantages, features, and objects of the invention will be apparent from the following detailed description of the invention in conjunction with the associated drawings, wherein the drawings show:
- Fig. 1:: a first embodiment of a valve unit with two single valves in a sche- matic cross section in a first position;
- Fig. 2:: the valve unit of Fig. 1 in a second position;
- Fig. 3:: a second embodiment of valve unit with a plurality of passive valve devices in a schematic cross section;
- Fig. 4:: a first embodiment of a hydraulic pump, comprising a valve unit ac- cording to Figs. 1 and 2;
- Fig. 5:: a second embodiment of a hydraulic pump, comprising two valve units, each having a single valve device.

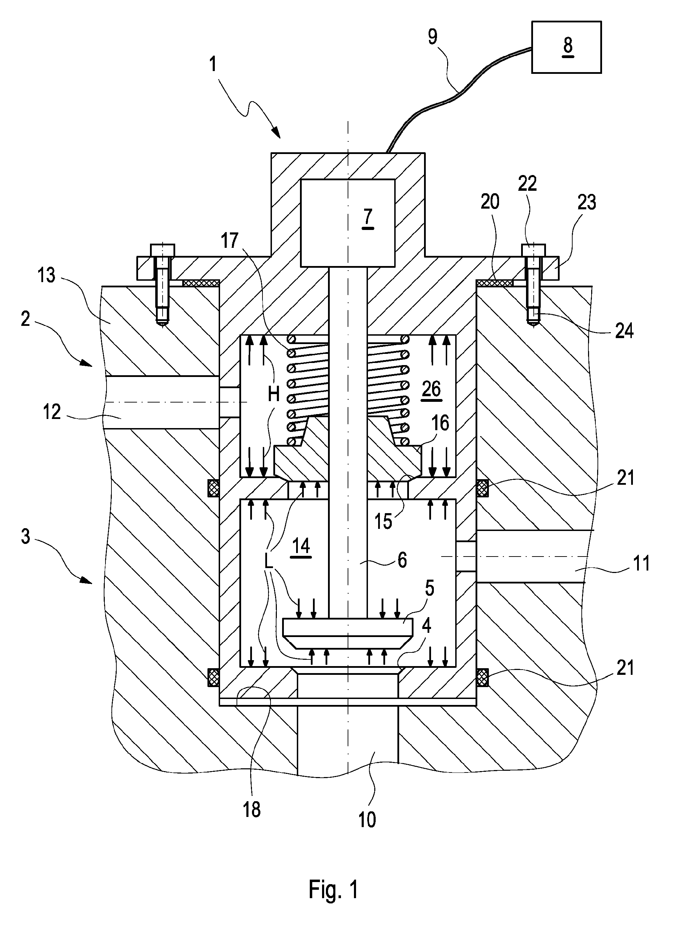

In Fig. 1 a first possible possible embodiment of a multiple valve unit 1 is depicted in a schematic cross section. The multiple valve unit 1 comprises two separate valve sections 2, 3, namely a high pressure valve section 2 and a low pressure valve section 3. The two valve sections 2, 3 are both designed as a valve head-valve seat valve and can be opened and/or closed independent from each other.

The low pressure valve section 3 is of an actuated type. More detailed, the low pressure valve 3 comprises a valve seat 4 and a valve head 5, which can be brought into contact with each other (closed position of the low pressure valve 3) or out of contact (open position of the low pressure valve 3). In Fig. 1, the low pressure valve 3 is depicted in its open position. The valve head 5 is mounted on a valve stem 6, which connects the valve head 5 to an actuator 7, which can change the position of the valve head 5, at least under certain working conditions of the multiple valve unit 1. In principle, the valve actuator 7 can be of any type. In the presently shown embodiment, the actuator 7 is of an electric type (for example a magnetic coil, which is interacting with a part of the valve stem 6 that is made of a ferromagnetic material) and can be actuated by applying an electric current, which is generated by an electronic controller 8 and fed to the actuator 7 via a pair of electric wires 9. The electronic controller 8 can be a single electronic board computer or the like. Of course, the electronic controller 8 can be fed by one or several control signals and/or by one or several sensor inputs.

The high pressure valve section 2 is of a passive design, i.e. it is opened and closed by the pressure differences of the fluid on both sides of the high pressure valve section 2. The high pressure valve 2 is also of a design, comprising a valve seat 15 and a valve head 16. A metal spring 17 is provided, generating a biasing force in the closing direction of the high pressure valve 2. In the presently shown embodiment, the valve head 16 of the high pressure valve 2 is arranged on the valve stem 6 of the low pressure valve 3 and can be slidingly moved in an axial direction of the valve stem 6. The arrangement of the valve head 16 on the valve stem 6 is done in a way that the gap between the valve head 16 and the stem 6 is essentially fluid tight. In the position of the multiple valve unit 1, as shown in Fig. 1, the high pressure valve 2 is shown in its closed position, i.e. the valve head 16 of the high pressure valve 2 is in a sealing contact with its corresponding valve seat 15.

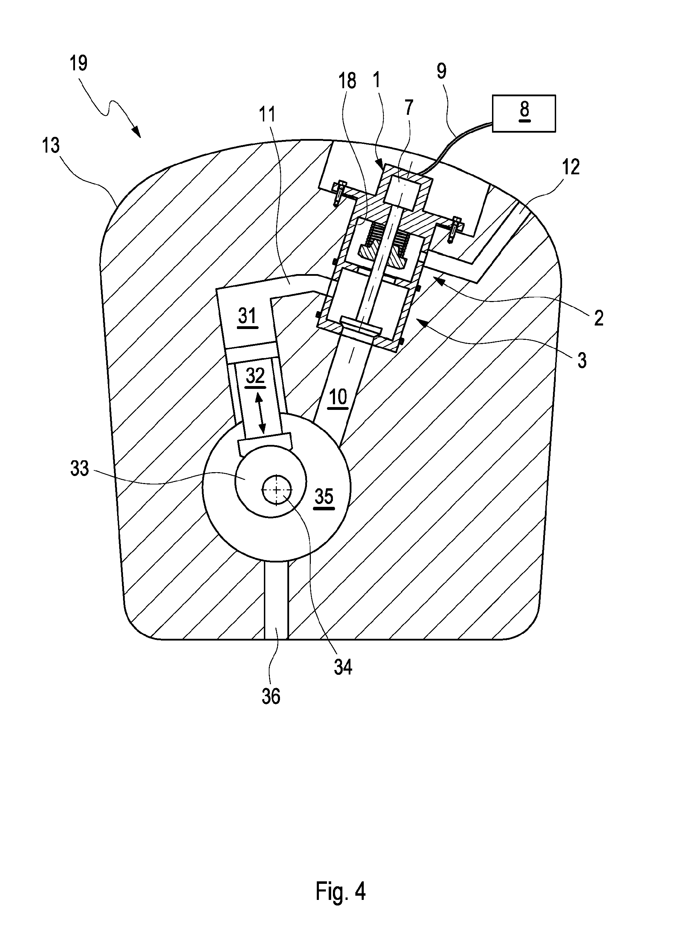

As can be seen from Fig. 1, the multiple valve unit 1 is designed as a preassembled unit, which can be handled independently. As an example, the multiple valve unit 1 can be handled, stored and sold as a separate, preassembled unit. As can be further seen from Fig. 1 (in particular when cross-referencing to Fig. 4), the multiple valve unit 1 can be assembled into a valve receiving space 18, which is provided in the body 13 of a synthetically commutated hydraulic pump 19. In this position, the multiple valve unit 1 can be fixed by several small screws 22, which penetrate through a flange part 23 of the multiple valve unit 1 and get in contact with threaded bores 24, which are provided in the body 13 of the synthetically commutated hydraulic pump 19. Furthermore, between the flange part 23 of the multiple valve unit 1 and the outer surface of the body 13, a flat sealing 20 is provided. Furthermore, to sealing rings 21 are provided between the inner surface of the valve receiving space 18 and the outer surface of the multiple valve unit 1. With the help of the sealings 20, 21, the separate fluid ports 10, 11, 12 and the outside of the body 13 are sealed from each other in a fluid proof way.

In the position of the multiple valve unit 1, as shown in Fig. 1, a fluid communication is established between a low pressure channel 10 and the cylinder channel 11, provided within the body 13 of the synthetically commutated hydraulic pump 19. The fluid communication between the low pressure channel 10 and the cylinder channel 11 is established through the open low pressure valve section 3 and the fluid distribution chamber 14 of the multiple valve unit 1. On the other hand, due to the closed position of the first valve section 2, the fluid connection between cylinder channel 11 and high pressure channel 12 is disconnected.

Assuming that the low pressure channel 10 and the cylinder channel 11 are essentially depressurised (as indicated by the low pressure arrows L -arrows having a shorter length), only a small force (if at all), which could push the multiple valve unit 1 out of its valve receiving space 18, can be generated by the depressurised fluid. Furthermore, each surface, which can generate a force, pushing the multiple valve unit 1 out of the valve receiving space 18 is at least in part "balanced" by surfaces, which generate an opposite force, i.e. a force, which pushes the multiple valve unit 1 into its valve receiving space 18. Hence, the resulting net force is very low.

A similar effect occurs on the high pressure side of the multiple valve unit 1 (i.e. those parts of the multiple valve unit 1, being in fluid connection with the high-pressure channel 12; it is supposed that these parts are still pressurised from the previous pumping stroke, for example). As can be seen from Fig. 1, for every surface of the upper chamber 26, which generates a force that tends to push the multiple valve unit 1 out of its valve receiving space 18, an opposing surface is present, which generates an oppositely directed force, pushing the multiple valve unit 1 into its valve receiving space 18. This is indicated by the high pressure arrows H, having a longer length. The "balancing" is particularly important on the high pressure side of the multiple valve unit 1. This is, because the highly pressurised fluid can produce accordingly high forces. Due to the "balancing", the net force is approximately zero.

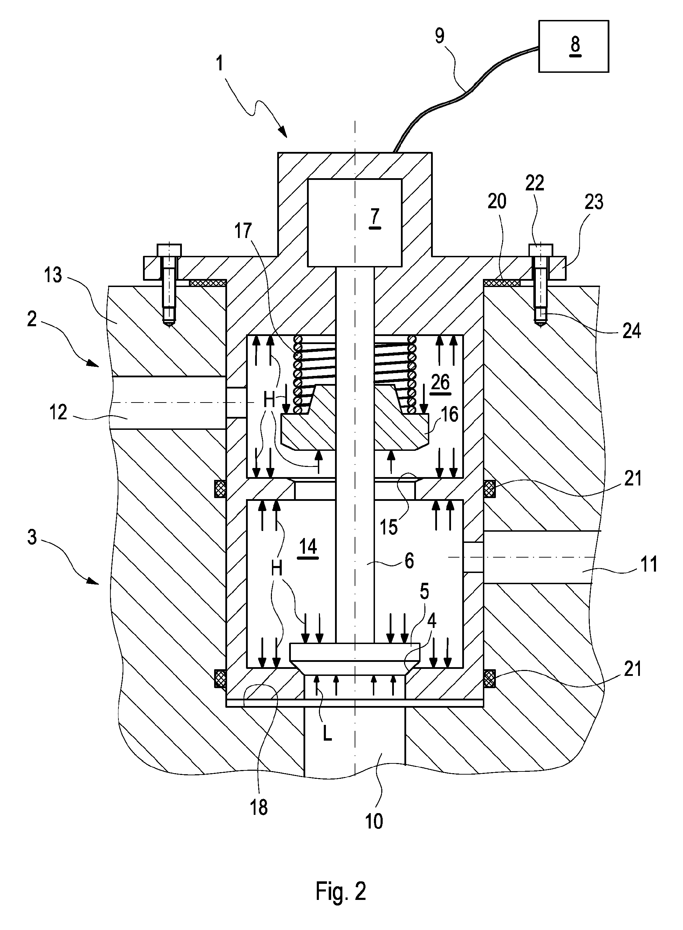

Therefore, in the state of the multiple valve unit 1, as shown in Fig. 1, the multiple valve unit 1 is essentially neither pushed out of its valve receiving space 18, nor pushed into its valve receiving space 18. In Fig. 2, a different state of the multiple valve unit 1 is shown. In the position, as depicted in Fig. 2, the low pressure valve section 3 is closed, while the high pressure valve section 2 is opened (for example, the piston 32 of the synthetically commutated hydraulic pump 19 is moving upward and the low pressure valve 3 has been actively closed). Now, the low pressure channel 10 is cut off from the cylinder channel 11 and from the high pressure channel 12. However, a fluid communication is established between the cylinder channel 11 and the high pressure channel 12 via the fluid distribution chamber 14, high pressure valve section 2 and upper chamber 26. Hence, the low pressure channel 10 is essentially depressurised, while fluid distribution chamber 14 and upper chamber 26 (as well as cylinder channel 11 and high pressure channel 12) are pressurised to high pressure.

As indicated by the high pressure arrows H and the low pressure arrows L, the respective fluid pressure results in forces, acting on the walls of the parts involved, in particular on the walls of the fluid distribution chamber 14, the walls of the upper chamber 26 and the walls of both valve heads 5, 16. Once again, however, the walls are arranged and dimensioned in a way that the generated forces essentially cancel each other, at least in part (and particularly concerning the higher forces, generated by the highly pressurised fluid). Once again, even in the position of the multiple valve unit 1, as shown in Fig. 2, the multiple valve unit 1 is essentially neither pushed out of its valve receiving space 18, nor pushed into its valve receiving space 18.

Therefore, the attachment means for attaching the multiple valve unit 1 in its valve receiving space 18 can be relatively weakly designed. In the present embodiment, several screws 22, each of a smaller diameter, are used for this purpose. An advantage of using such screws, penetrating a flange part 23 of the multiple valve unit 1 and being engaged in a threaded bore 24 of the body 13, is that the position of the valve unit 1, in particular its angular position, can be exactly defined. Therefore, an alignment between the channels 10, 11 and 12 and the respective openings in the multiple valve unit 1 can be easily achieved. Furthermore, the electrical connection 9 between the multiple valve unit 1 and the electronic controller 8 can be simplified. In particular, and automated assembly of the synthetically commutated pump 19 can usually be performed much easier.

Although the multiple valve unit 1 has been described in Figs. 1 and 2 in connection with a synthetically commutated hydraulic pump 19 and its corresponding body 13, it has to be understood that the multiple valve unit 1 can be used in different environments as well.

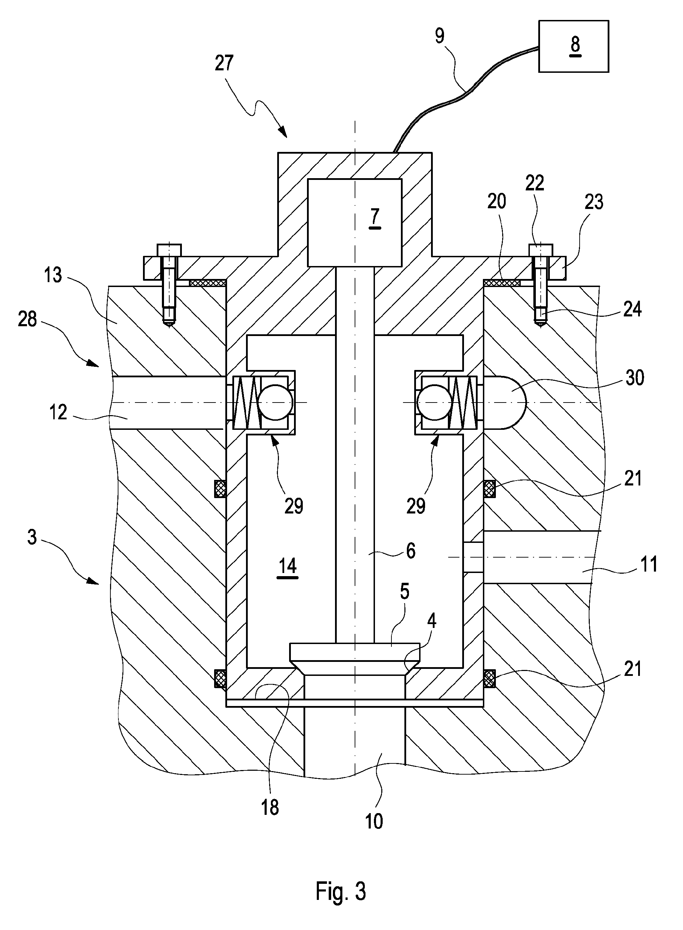

In Fig. 3, a different possible design of the multiple valve unit 27 is shown in a schematic cross section. In most of its parts, the presently shown multiple valve unit 27 resembles the previously described multiple valve unit 1, as shown in Figs. 1 and 2.

However, the high pressure valve section 28 of the multiple valve unit 27 is designed differently. Presently, a plurality of spring-loaded ball type check valves 29 are used for the high pressure valve section 28. The check valves 29 are arranged in a circumferential way. This way, a large maximum fluid flow cross-section can be achieved, even when using small check valves 29. To connect each check valve 29 to the high pressure channel 12, a ringshaped channel 30, connecting the "backside" of each check valve 29 to the high pressure channel 12 is provided within the body 13 of the synthetically commutated hydraulic pump 19 (or a different device).

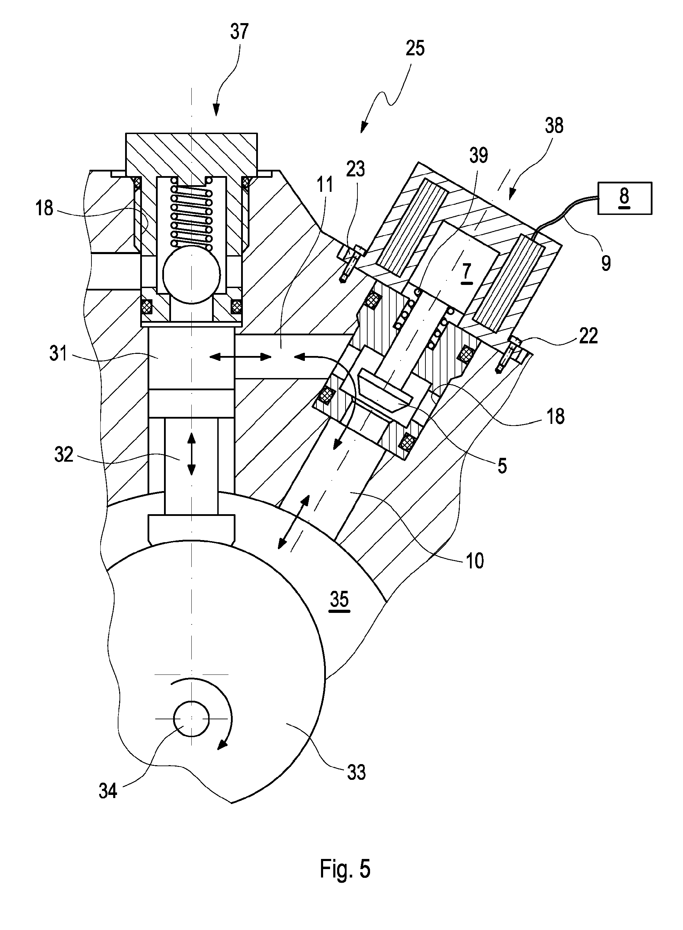

Of course, both the multiple valve unit 1 and the multiple valve unit 27, as shown in Figs. 1 and 2 and Fig. 3, respectively, can also be realised with only a low pressure valve section 3 (and therefore no high pressure valve section 2 and/or high pressure valve section 28). Such a modified (simplified) valve is shown in connection with the synthetically commutated hydraulic pump 25, as shown in Fig. 5, as an example.

In Fig. 4, a synthetically commutated hydraulic pump 19 is shown in a schematic cross section. The synthetically commutated hydraulic pump 19 is depicted with a single working chamber 31, in which a piston 32 is reciprocating back and forth. The movement of the piston 32 is generated by an eccentric 33, mounted off-axis on a rotating shaft 34. The eccentric 33 is arranged in an inner chamber 35, which is filled with hydraulic oil. The hydraulic oil is supplied by a hydraulic oil supply line 36. The hydraulic oil within the inner chamber 35 is approximately at ambient pressure.

When the piston 32 is moving downward and the volume within the working chamber 31 is increasing, the low pressure valve 3 will open under the resulting fluid pressure differences and hydraulic oil at ambient pressure will be sucked in from the inner chamber 35 through the low pressure channel 10, the low pressure valve 3 and the cylinder channel 11 to the working chamber 31.

Once the piston 32 has reached its bottom dead centre and starts to move upward again, the hydraulic fluid is initially pushed back through the still open low pressure valve 3 into the inner chamber 35 via cylinder channel 11 and low pressure channel 10. When directed by the electronic controller 8, the low pressure valve 3 will be closed and the (remaining fraction of the) hydraulic oil within the working chamber 31 becomes pressurised. Once the pressure within the working chamber 31 exceeds the pressure within the high pressure channel 12, the (passive) high-pressure valve 2 will open and the fluid will be pushed out of the working chamber 31 to the high pressure channel 12 via cylinder channel 11 and high-pressure valve 2.

Once the piston 32 has reached its upper dead centre and starts to move downward again, the high pressure valve 2 will close, the low pressure valve 3 will open and the cycle starts again.

Although the synthetically commutated hydraulic pump 19 is only shown with a single piston 32 in Fig. 4, it is clear that the synthetically commutated hydraulic pump 19 can also be designed with a plurality of pistons 32 and working chambers 31.

In Fig. 5, a second possible embodiment of a synthetically commutated hydraulic pump 25 is shown in a schematic cross section. The synthetically commutated hydraulic pump 25 resembles the synthetically commutated hydraulic pump 19, as shown in Fig. 4, in major parts. Therefore, for brevity identical reference numbers have been used for similar parts.

The essential difference between the synthetically commutated hydraulic pump 19 of Fig. 4 and the presently shown synthetically commutated hydraulic pump 25 according to Fig. 5 is that the multiple valve unit 1, comprising the high pressure valve section 2 and the low pressure valve section 3 (see Fig. 4) is split up into two separate parts, i.e. into high-pressure valve 37 and (actuated) low pressure valve 38. Despite this difference, the basic ideas of both synthetically commutated hydraulic pumps 19 and 25 are quite similar. Likewise, the basic ideas of the high pressure valve 37 and the low pressure valve 38 are similar to those of the high pressure valve section 28 and the low pressure valve section 3 of the multiple valve unit 27, as shown in Fig. 3.

When the piston 32 is moving downward and the volume within the working chamber 31 is increasing, the low pressure valve 38 will open under the resulting fluid pressure difference and hydraulic oil will be sucked into the working chamber 31 via the low pressure channel 10, the low pressure valve 38 and the cylinder channel 11. Similarly, the low pressure valve 38 will be closed by the actuator 7, if an actuation signal is sent by the electronic controller 8. In the presently shown embodiment of the low pressure valve 38, a biasing spring 39 is provided. The biasing spring 39 can generate a certain biasing force, pushing the valve head 5 of the low pressure valve 38 into an open position. This way, the low pressure valve 38 can be securely held open if no actuation signal is generated by the electronic controller 8. However, depending on the actual design parameters of the synthetically commutated hydraulic pump 25, the biasing spring 39 can be omitted as well (the same applies to the previously described multiple valve units 1 and 27).

The high pressure valve 37 is designed as a passive spring-loaded ball type check valve 37, which functions in accordance to the check valves 29 of the high pressure valve section 28 of the valve unit 27, shown in Fig. 3.

As it is clear to the reader, the body of the low pressure valve 38 is "balanced" in a way so that no large force is generated, trying to push the low pressure valve 38 out of its valve receiving space 18, even if the synthetically commutated hydraulic pump 25 is operated. In particular, even if the cylinder channel 11 is pressurised to a high pressure level, no (significant) force is generated, trying to push the low pressure valve 38 out of its valve receiving space 18. Such a "balanced" design is particularly important for the low pressure valve 38, because of the electric wires 9. The presently chosen attachment of the low pressure valve 38 via several screws 22 provides for a defined angular position of the low pressure valve 38.

The high pressure valve 37, however, is designed according to the state of the art. In particular, if the fluid in the working chamber 31 is pressurised to a high pressure level, a significant force results, which tries to push the high pressure valve 37 out of its respective valve receiving space 18. In the presently depicted embodiment, the high-pressure valve 37 is provided with an outer thread, engaging in an inner thread, provided within the valve's valve receiving space 18. As can be seen from Fig. 5, the dimensions of the high pressure valve 37 and the working chamber 31 are chosen in a way that the high-pressure valve 37 acts as a plug for the working chamber 31 of piston 32.

## Claims

1. Valve unit (1, 27, 37, 38) for a valve receiving space (18), in particular for a valve receiving space (18) of a fluid working machine (19, 25), comprising at least one valve device (2, 3, 28, 37, 38) and at least one attachment means (22) for attachment of said valve unit (1, 27) to said valve receiving space (18), **characterised in that** said valve unit (1, 27, 37, 38) is designed and arranged in a way that when at least one of said valve devices (2, 3, 28, 37, 38) is pushed towards its closed position under the influence of fluid pressure, at least part of the fluid pressure is generating a force (H, L), which is at least partially directed towards said receiving space (18) of said valve unit (1, 27, 37, 38).

2. Valve unit (1, 27, 37, 38) according to claim 1, **characterised in that** at least one of said valve devices (2, 3, 28, 37, 38) comprises at least one valve seat (4, 15) and at least one valve head (5, 16).

3. Valve unit (1, 27, 37, 38) according to claim 1 or 2, **characterised by** a plurality of valve devices (2, 3, 28), whose opening and/or closing movements are preferably at least in part independent of each other.

4. Valve unit (1, 27, 37, 38) according to any of the preceding claims, **characterised in that** at least one of said valve devices (2, 3, 28, 37, 38), in particular a single valve device, is an actuated valve device (3, 38).

5. Valve unit (1, 27, 37, 38) according to any of the preceding claims, **characterised in that** at least one of said valve devices (2, 3, 28, 37, 38), preferably a plurality of said valve devices, is an passive valve device (2, 28, 37).

6. Valve unit (1, 27, 37, 38) according to any of the preceding claims, particularly according to any of claims 3 to 5, **characterised in that** at least two of said valve devices (2, 3, 28, 37, 38) have a common fluid connection (11, 14).

7. Valve unit (1, 27, 37, 38) according to any of the preceding claims, particularly according to claim 6, **characterised in that** said common fluid connection (11, 14) is located in the middle of said valve devices (2, 3, 28).

8. Valve unit (1, 27, 37, 38) according to any of the preceding claims, particularly according to any of claims 3 to 7, **characterised in that** at least one of said valve devices (2) is movably arranged on at least another one of said valve devices (3, 6).

9. Valve unit (1, 27, 37, 38) according to any of the preceding claims, particularly according to any of claims 3 to 8, **characterised in that** at least one of said valve devices (2, 3, 28, 37, 38), preferably at least one actuated valve device (3, 38), is actuated in a mounting direction of said valve unit (1, 27, 37, 38).

10. Valve unit (1, 27, 37, 38) according to any of the preceding claims, particularly according to any of claims 3 to 9, **characterised in that** at least one of said valve devices (28), preferably at least one passive valve device (28), is arranged in a direction that is perpendicular to said mounting direction of said valve unit (27).

11. Valve unit (1, 27, 37, 38) according to any of the preceding claims, **characterised by** at least one angular positioning device (22).

12. Valve unit (1, 27, 37, 38) according to any of the preceding claims, **characterised in that** at least one of said attachment means (22) is at least partially designed as a flange means (23).

13. Fluid working machine (19, 25), **characterised by** at least one valve unit (1, 27, 37, 38) according to any of the preceding claims 1 to 12.

14. Fluid working machine (19, 25) according to claim 13, **characterised in that** said fluid working machine (19, 25) is designed as a synthetically commutated hydraulic machine (19, 25).
